# EUROPÄISCHE PATENTSCHRIFT

(11) **EP 3 790 732 B1**
(45) Veröffentlichungstag und Bekanntmachung des Hinweises auf die Patenterteilung: **22.09.2021**
(21) Anmeldenummer: 18724205.2
(22) Anmeldetag: 08.05.2018
(51) Int. Cl.: B29D 35/14, A43B 13/18, A43B 13/32, B29D 35/12, A43B 13/20

(54) **VERFAHREN ZUR HERSTELLUNG EINER SOHLE EINES SCHUHS, INSBESONDERE EINES SPORTSCHUHS**
METHOD FOR PRODUCING A SOLE OF A SHOE, IN PARTICULAR OF A SPORTS SHOE
PROCÉDÉ DE FABRICATION D'UNE SEMELLE DE CHAUSSURE, EN PARTICULIER DE CHAUSSURE DE SPORT

(43) Veröffentlichungstag der Anmeldung: 17.03.2021
(73) Patentinhaber: PUMA SE, 91074 Herzogenaurach (DE)
(72) Erfinder: BONIN, Mauro, 90419 Nürnberg (DE); HARTMANN, Matthias, 91301 Forchheim (DE); SUSSMANN, Reinhold, 91443 Scheinfeld (DE)
(74) Vertreter: Gosdin, Carstensen & Partner Patentanwälte Partnerschaftgesellschaft mbB
(86) Internationale Anmeldenummer: PCT/EP2018/061935
(87) Internationale Veröffentlichungsnummer: WO 2019/214815

(56) Entgegenhaltungen:
- EP-A1- 1 563 750
- EP-A2- 2 103 420
- WO-A1-2006/112622
- WO-A1-2010/084367
- US-A1- 2011 047 720
- US-A1- 2014 196 308
- US-A1- 2014 208 610

## Beschreibung

Die Erfindung betrifft ein Verfahren zur Herstellung einer Sohle eines Schuhs, insbesondere eines Sportschuhs.

Insbesondere bei Sportschuhen werden mitunter Sohlen benötigt bzw. gewünscht, die eine Anzahl Ausnehmungen aufweisen, die sich in eine Querrichtung senkrecht zur Längsrichtung sowie senkrecht zur Vertikalrichtung erstrecken und die Sohle zumindest teilweise durchsetzen. Hierdurch wird versucht, durch die geometrische Gestaltung der Sohle dieser ein bestimmtes und gewünschtes Federverhalten zu geben. Hierunter ist zu verstehen, dass die Sohle in vertikaler Richtung bei der Beaufschlagung mit der Gewichtskraft des Trägers des Schuhs ein gewünschtes Verformungsverhalten aufweist, insbesondere eine bestimmte Kennlinie zwischen beaufschlagender Kraft und Dehnung in vertikaler Richtung. Eine solche Sohle ist beispielsweise aus der US 2 983 056 A bekannt. Der Sohlenkörper ist hier in Querrichtung mit einer Vielzahl von Ausnehmungen versehen, die, seitlich auf die Sohle, also in Querrichtung gesehen, kreisrund ausgebildet sind. Mit solchen Ausnehmungen lässt sich Einfluss auf das Feder- bzw. Dämpfungsverhalten der Sohle nehmen.

Die US 2014/208610 A1 offenbart eine Schuhsohle, die mehrteilig aufgebaut ist, wobei einzelne flächige Sohlenabschnitte übereinander angeordnet und miteinander verbunden sind.

Der Erfindung liegt die Aufgabe zugrunde, ein Verfahren der eingangs genannten Art bereitzustellen, mit dem derartige Sohlen insbesondere mit komplex ausgebildeten Ausnehmungen formgenau und prozessstabil hergestellt werden können.

Die Erfindung löst die Aufgabe gemäß dem unabhängigen Anspruch 1.

Die Lösung dieser Aufgabe durch die Erfindung ist dadurch gekennzeichnet, dass die Sohle ein erstes und ein zweites Sohlenteil aufweist, wobei die beiden Sohlenteile an einer Fläche aneinandergrenzen, die in Längsrichtung des Schuhs und in Vertikalrichtung verläuft und wobei die beiden Sohlenteile an ihrer Oberseite Abschnitte aufweisen, die benachbart zueinander angeordnet sind und insgesamt eine weitgehend ebene Fläche bilden, wobei das Verfahren die Schritte umfasst:
a) Herstellen des ersten Sohlenteils in einem ersten Werkzeug oder Werkzeugteil durch Einspritzen, Einsprühen oder Eingießen des Sohlenmaterials (im spritzgießfähigen, gießfähigen oder sprühfähigen Zustand), in eine Werkzeugkavität des ersten Werkzeugs oder Werkzeugteils, wobei in die Werkzeugkavität eine Anzahl Volumenelemente hineinragen, die Hohlräume im ersten Sohlenteil schaffen;
b) Herstellen des zweiten Sohlenteils in einem zweiten Werkzeug oder Werkzeugteil durch Einspritzen, Einsprühen oder Eingießen des Sohlenmaterials (im spritzgießfähigen, gießfähigen oder sprühfähigen Zustand) in eine Werkzeugkavität des zweiten Werkzeugs oder Werkzeugteils, wobei in die Werkzeugkavität eine Anzahl Volumenelemente hineinragen, die Hohlräume im zweiten Sohlenteil schaffen;
c) Nach dem Verfestigen des ersten und zweiten Sohlenteils: Herausnehmen des ersten und des zweiten Sohlenteils aus dem ersten und dem zweiten Werkzeug oder Werkzeugteil und Einlegen des ersten und des zweiten Sohlenteils in ein drittes Werkzeug, wobei die beiden Sohlenteile so zueinander ausgerichtet werden, dass die Hohlräume zumindest teilweise miteinander fluchten und sich über die gesamte Breite der zu fertigenden Sohle erstrecken;
d) Übergießen, Übersprühen und/oder Überspritzen zumindest eines Abschnitts des ersten und des zweiten Sohlenteils mit einem Verbindungsmaterial, wobei die übergossenen, übersprühten und/oder überspritzten Abschnitte des ersten und des zweiten Sohlenteils aneinander angrenzend sind, um das erste und zweite Sohlenteil miteinander zu verbinden.

Demgemäß werden zumindest zwei Teile, vorzugsweise zwei Hälften, der Sohle im genannten ersten bzw. zweiten Werkzeug vorgefertigt, wobei Hohlräume in der Sohle geschaffen werden, die sich beim späteren Gebrauch des Schuhs insbesondere in eine Richtung quer zur Längsrichtung des Schuhs und zur vertikalen Richtung (bei bestimmungsgemäßer Benutzung des Schuhs) erstrecken. Diese beiden vorgefertigten Teile der Sohle werden dann in ein drittes Werkzeug eingelegt und durch Aufbringung eines Verbindungsmaterials miteinander verbunden.

Generell können auch mehr als zwei Teile hierfür vorgesehen werden. Dann ist entsprechend vorgesehen, dass das Verfahren weiterhin die Schritte umfasst:
e) Herstellen mindestens eines weiteren Sohlenteils in einem weiteren Werkzeug oder Werkzeugteil durch Einspritzen, Einsprühen oder Eingießen des Sohlenmaterials (im spritzgießfähigen, gießfähigen oder sprühfähigen Zustand) in eine Werkzeugkavität des weiteren Werkzeugs oder Werkzeugteils, wobei in die Werkzeugkavität eine Anzahl Volumenelemente hineinragen, die Hohlräume in dem weiteren Sohlenteil schaffen;
f) Nach dem Verfestigen des weiteren Sohlenteils: Herausnehmen des weiteren Sohlenteils aus dem weiteren Werkzeug oder Werkzeugteil und Einlegen des weiteren Sohlenteils zusammen mit dem ersten und zweiten Sohlenteil in das dritte Werkzeug;
g) Übergießen, Übersprühen und/oder Überspritzen zumindest eines Abschnitts des ersten, des zweiten und des weiteren Sohlenteils mit einem Verbindungsmaterial, wobei die übergossenen, übersprühten und/oder überspritzten Abschnitte des ersten, des zweiten und weiteren Sohlenteils aneinander angrenzend sind, um das erste, das zweite und das weitere Sohlenteil miteinander zu verbinden.

Im dritten Werkzeug können wiederum Volumenelemente angeordnet sein, die während der obigen Schritte d) bzw. g) die Hohlräume in den Sohlenteilen ausfüllen und auf diese Weise freihalten.

Beim Herstellen des ersten und zweiten Sohlenteils können die Werkzeugkavitäten des ersten und zweiten Werkzeugs oder Werkzeugteils durch ein Abschlussteil abgeschlossen werden. Hierdurch ergibt sich eine definierte Geometrie für das zu fertigende Teil der Sohle.

Vor dem Einlegen der Sohlenteile in das dritte Werkzeug wird vorzugsweise ein weiteres Sohlenelement im dritten Werkzeug platziert. Dieses weitere Sohlenelement ist vorzugsweise eine Außensohle. Bevorzugt ist dabei vorgesehen, dass das Verbindungsmaterial und das weitere Sohlenelement an sich gegenüberliegenden Seiten der herzustellenden Sohle angeordnet sind. Zwischen dem weiteren Sohlenelement und den Sohlenteilen kann ein Bindemittel eingebracht werden; bei diesem handelt es sich insbesondere um einen Klebstoff, bei dem besonders bevorzugt an flüssiges Polyurethan gedacht ist.

Als Material für die Sohlenteile und/oder als Verbindungsmaterial wird bevorzugt Polyurethan-Material, Thermoplastisches Polyurethan (TPU) oder Thermoplastisches Elastomer (TPE) verwendet oder ein Material, das diese Stoffe aufweist. Das Material für die Sohlenteile und/oder das Verbindungsmaterial wird dabei bevorzugt geschäumt.

Das Material der Sohlenteile hat vorzugsweise eine Dichte zwischen 0,20 und 0,50 g/cm³. Es hat bevorzugt eine Härte zwischen 30 und 50 Asker C.

Die genannten Sohlenteile bilden bevorzugt eine Zwischensohle.

Das Öffnen des dritten Werkzeugs zwecks Entformen der fertigen Sohle erfolgt bevorzugt durch Wegbewegen zweier Teile des dritten Werkzeugs voneinander.

Die Ausnehmungen in der fertigen Sohle durchsetzen bevorzugt zumindest teilweise die Sohle in Querrichtung vollständig. Es kann aber auch vorgesehen sein, dass sich die Ausnehmungen nur über einen Teil der Erstreckung in Querrichtung ausdehnen.

Durch die so erreichte Ausgestaltung der Sohle ist es möglich, die Steuerung der Feder- und Dämpfungseigenschaften bzw. der Härte der Sohle in einfacher Weise zu beeinflussen. Durch die Ausgestaltung der Ausnehmungen kann bei der Beauftragung der Sohle mit der Gewichtskraft des Trägers des Schuhs, der mit der Sohle versehen ist, ein gewünschtes Einfedern realisiert werden.

Dieses Konzept stellt insofern auf die Benutzung von so genanntem "Mechanical Meta Material" ab, bei dem vorgesehen ist, dass verschiedene Anreihungen von Durchbrüchen (bekannt sind hierbei vor allem im Querschnitt runde oder ovale Ausnehmungen) unterschiedlicher Größe in die Sohle eingebracht werden bzw. sind, um ein bestimmtes Feder- bzw. Dämpfungsverhalten der Sohle zu erreichen. Somit kann ein "Engineered Damping" erfolgen, bei dem also die Feder- bzw. Dämpfungseigenschaften einer gewünschten Kennlinie gehorchen.

Bei Aufbringung einer Verformungskraft - hervorgerufen durch die Gewichtskraft des Trägers des Schuhs - kollabieren die entstehenden Zellen in spezieller Weise, so dass spezielle Feder- bzw. Dämpf-Kennlinien realisiert werden können.

Insoweit wird sozusagen ein "programmierbares Zusammenklappen bzw. Kollabieren" der Sohlen-Struktur erreicht, da die Struktur in sich ein zusammenhängendes System bildet und die einzelnen Materialabschnitte voneinander abhängig sind.

Die Vorteile der durch das vorgeschlagene Verfahren erzielten Struktur können zu einer "negativen Steifigkeit" führen, d. h. drückt man die Sohle in vertikaler Richtung etwas zusammen, fällt die Sohle in definierter Weise in sich zusammen. Auch ist es auf die beschriebene Weise möglich, die Sohle so zu strukturieren, dass sie einerseits ein hinreichendes Maß an Elastizität aufweist und andererseits infolge einer Deformationskraft Verformungsenergie aufnimmt.

Das vorgeschlagene Verfahren erlaubt eine prozessstabile und präzise Fertigung der Sohle.

Wie oben ausgeführt, kann die herzustellende Sohle aus mindestens zwei, allerdings auch aus mehr Sohlenteilen bestehen.

Die zum Einsatz kommenden Volumenelemente sind stabförmig ausgebildet und weisen entlang ihrer Längserstreckung einen konstanten Querschnitt auf. Dieser kann letztlich eine beliebige Form aufweisen. Wie im Zusammenhang mit dem nachfolgenden Ausführungsbeispiel dargestellt, ist hier beispielsweise die Querschnittsform einer "Acht" vorgesehen. Die Volumenelemente können mittels eines additiven Fertigungsverfahrens (3-D-Druck) oder auf andere Art und Weise hergestellt sein, beispielsweise auch durch einen klassischen spanenden Fertigungsprozess (Fräsen). Als Material für die Volumenelemente kommt insbesondere Edelstahl in Betracht.

Die Volumenelemente können dabei austauschbar in dem ersten bzw. zweiten (und gegebenenfalls auch weiteren) Werkzeug oder Werkzeugteil angeordnet sein, um Sohlen mit unterschiedlich geformten Hohlräumen zu fertigen.

In der Zeichnung ist ein Ausführungsbeispiel der Erfindung dargestellt. Es zeigen:
- Fig. 1: eine Zwischensohle eines Sportschuhs (noch ohne oben aufgebrachtes Verbindungsmaterial), wobei diese nach dem erfindungsgemäßen Verfahren produziert wird,
- Fig. 2: den Ausschnitt "X" gemäß Figur 1 in detaillierterer Darstellung, gesehen in eine Querrichtung senkrecht zur Längsrichtung der Sohle und senkrecht zur vertikalen Richtung,
- Fig. 3: schematisch ein erstes und zweites Werkzeugteil, in denen jeweils eine Hälfte der Zwischensohle hergestellt wird,
- Fig. 4: schematisch ein drittes Werkzeug, in welches die beiden vorgefertigten Hälften der Zwischensohle eingelegt sind, wobei das Verbindungsmaterial, welches die beiden Hälften verbindet, noch fehlt,
- Fig. 5: das dritte Werkzeug gemäß Fig. 4, wobei nunmehr das Verbindungsmaterial, das die beiden Hälften der Zwischensohle verbindet, eingebracht wurde,
- Fig. 6: in perspektivischer Darstellung das erste und zweite noch leere Werkzeugteil,
- Fig. 7: einen Ausschnitt aus Fig. 6 in vergrößerter Darstellung,
- Fig. 8: in perspektivischer Darstellung das erste und zweite Werkzeugteil, wobei jeweils Abschlusselemente angeordnet sind, um deren Kavitäten zu begrenzen,
- Fig. 9: in perspektivischer Darstellung das teilweise dargestellte dritte leere Werkzeug und
- Fig. 10: in perspektivischer Darstellung das dritte leere Werkzeug, bei dem ein oberes Abschlussteil der Kavität fehlt.

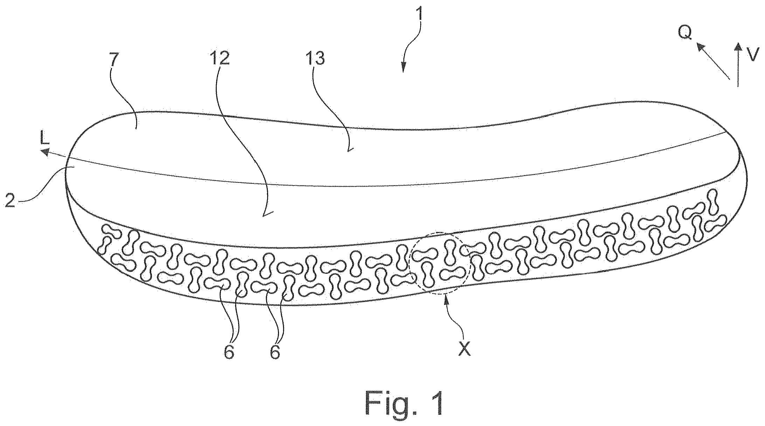

In Figur 1 ist eine Sohle 1 zu sehen, die sich in Längsrichtung L (entsprechend der Längsachse des Schuhs, der mit der Sohle versehen ist) sowie in Vertikalrichtung V erstreckt (die Vertikalrichtung V gibt die Richtung an, wenn der Schuh bzw. die Sohle bei bestimmungsgemäßer Verwendung auf dem Boden steht). Weiterhin erstreckt sich die Sohle 1 in eine Querrichtung Q, die sowohl auf der Längsrichtung L als auch auf der Vertikalrichtung V senkrecht steht.

Die Sohle 1 ist vorliegend als Zwischensohle ausgebildet, an deren Oberseite das (nicht dargestellte) Schuhoberteil in bekannter Weise befestigt ist. An der Unterseite der Sohle wird eine (in Figur 1 noch nicht dargestellte) Außensohle befestigt.

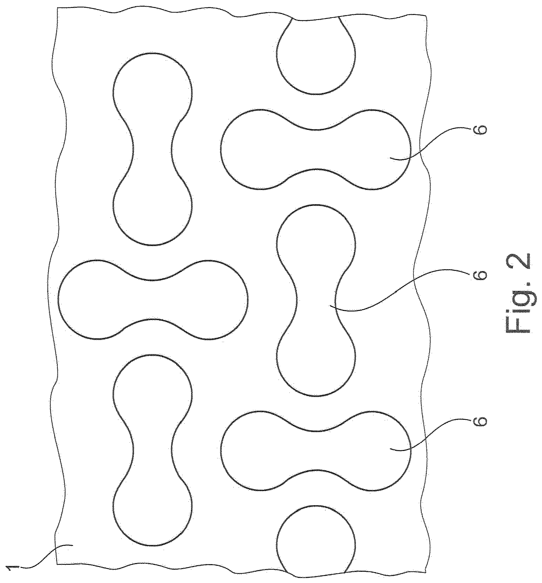

In die Sohle 1 sind Hohlräume 6 (Ausnehmungen) eingearbeitet. Bevorzugt erstrecken sich diese Ausnehmungen in Querrichtung Q über die gesamte Breite der Sohle 1. Details zur Ausgestaltung und Anordnung der Hohlräume 6 sind aus Figur 2 ersichtlich. Figur 2 zeigt die Einzelheit "X" gemäß Figur 1, nämlich die geometrische Gestaltung einer möglichen Ausgestaltung der Hohlräume 6.

Wie in Figur 2 in der Zusammenschau mit Figur 1 gesehen werden kann, sind zwei Reihen an Hohlräumen 6 in die Sohle 1 eingebracht, die jeweils im hier gezeigten bevorzugten Ausführungsbeispiel jeweils die Form einer "Acht" aufweisen. Durch diese Ausgestaltung kann erreicht werden, dass die Sohle des Schuhs ein spezielles Feder- bzw. Dämpfverhalten aufweist, wobei insbesondere bei der Beaufschlagung durch die Gewichtskraft des Trägers des Schuhs ein vorbestimmtes Kollabieren der Sohle infolge der Ausnehmungen erfolgt, was ein angenehmes Tragegefühl vermittelt.

Wie sich aus Figur 1 ergibt, besteht die Sohle 1 vorliegend aus zwei Teilen, nämlich aus einem ersten Sohlenteil 2 und einem zweiten Sohlenteil 7. Beide Sohlenteile 2, 7 weisen an ihrer Oberseite Abschnitte 12 bzw. 13 auf, die benachbart zueinander angeordnet sind und insgesamt eine weitgehend ebene Fläche bilden (die im wesentlichen die spätere Auflagefläche für den Fuß des Trägers bilden). Die beiden Sohlenteile 2 und 7 werden dabei separat und jeweils mit den gewünschten Hohlräumen 6 hergestellt und anschließend verbunden, indem auf die Abschnitte 12 und 13 Verbindungsmaterial aufgebracht wird, welches die beiden Sohlenteile 2, 7 zusammenhält.

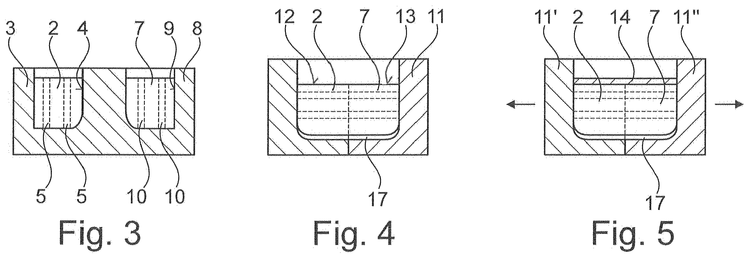

Die hierzu verfahrenstechnisch vorgesehene Vorgehensweise ist in den weiteren Figuren 3 bis 10 illustriert.

In Figur 3 ist zunächst schematisch ein erster Verfahrensschritt illustriert, bei dem in einem Werkzeug, das ein erstes Werkzeugteil 3 und ein zweites Werkzeugteil 8 aufweist, jeweils ein erstes Sohlenelement 2 und ein zweites Sohlenelement 7 hergestellt werden. Die beiden Werkzeugteile 3 und 8 sind hier, was nicht zwingend ist, in einem gemeinsamen Werkzeuggrundkörper angeordnet.

Jedes der beiden Sohlenteile 2 und 7 stellt die Hälfte der herzustellenden Zwischensohle eines Schuhs dar. Diesbezüglich wird auf Figur 1 Bezug genommen, wo die beiden Teile dargestellt sind. Zur Herstellung der beiden Sohlenteile 2 und 7 wird in die erste Werkzeugkavität 4 des ersten Werkzeugteils sowie in die zweite Werkzeugkavität 9 des zweiten Werkzeugteils 8 flüssiger Kunststoff eingespritzt, eingegossen oder eingesprüht. In den Werkzeugkavitäten 4, 9 sind Volumenelemente 5 bzw. 10 angeordnet, die sich aus der Wandung der Werkzeugkavitäten 4, 9 erstrecken. Wird flüssiges Kunststoffmaterial in die Werkzeugkavitäten 4, 9 eingegeben, sparen die Volumenelemente 5 bzw. 10 demgemäß Volumina aus, die sich als Hohlräume 6 in den zu fertigenden Sohlenteilen 2 bzw. 7 wiederfinden (siehe hierzu die gestrichelten Linien in Figur 3).

Sind die so gefertigten Sohlenteile 2 und 7 ausgehärtet, werden sie aus den beiden Werkzeugteilen 3 und 8 entnommen und in ein drittes Werkzeug 11 eingelegt, wie es Figur 4 zeigt. Dabei werden die beiden Sohlenteile 2 und 7 so zueinander ausgerichtet, dass die Hohlräume 6 zumindest teilweise miteinander fluchten und sich über die gesamte Breite der zu fertigenden Sohle erstrecken; dies ist wiederum durch die gestrichelten Linien in Figur 4 angedeutet.

Bevor die beiden Sohlenteile 2 und 7 im dritten Werkzeug 11 platziert werden, wird im unteren Bereich ein weiteres Sohlenelement 17 in Form einer Außensohle eingelegt. Zwischen diesem Sohlenelement und den beiden Sohlenteilen 2 und 7 kann dabei ein geeigneter Klebstoff platziert werden, so dass es zu einer festen Verbindung zwischen den Sohlenteilen 2 und 7 sowie dem weiteren Sohlenteil 17 kommt.

Nunmehr wird - wie es Figur 5 illustriert - auf die Abschnitte 12 und 13 Verbindungsmaterial 14 aufgespritzt, aufgesprüht oder aufgegossen, so dass sich auf den beiden Sohlenteilen 2 und 7 eine Materialschicht bildet, die die beiden Sohlenteile 2 und 7 zusammenhält.

Das dritte Werkzeug 11 besteht aus zwei Teilen 11' und 11", die in Richtung der beiden Pfeile in Figur 5 nach dem Aushärten des Verbindungsmaterials 14 voneinander weg bewegt werden, so dass die insoweit fertige Sohle aus dem Werkzeug 11 entnommen werden kann.

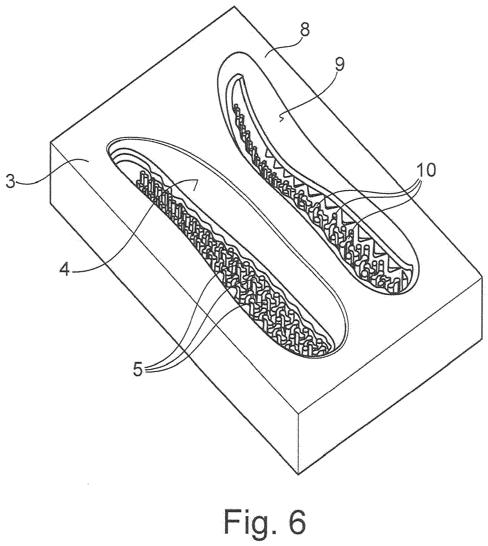

Die Figuren 3 bis 5 zeigen eine sehr schematische Darstellung. Demgegenüber ist in den weiteren Figuren 6 bis 10 eine konkretere Ausführungsform der zum Einsatz kommenden Werkzeuge zu sehen.

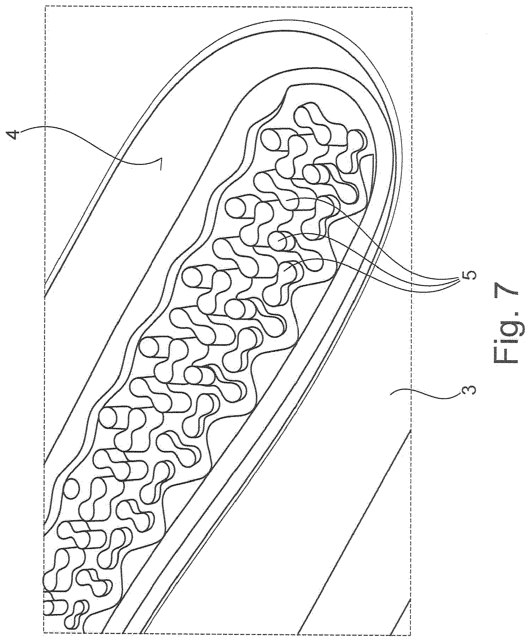

In Figur 6 ist noch einmal das Werkzeug mit dem ersten und zweiten Werkzeugteil 3 bzw. 8 zu sehen sowie die Darstellung der Werkzeugkavitäten 4 und 9. Zu erkennen ist ferner, wie sich die Volumenelemente 5 bzw. 10 aus der Wandung der jeweiligen Kavitäten heraus erstrecken. Dies geht in vergrößerter Darstellung noch einmal aus Figur 7 hervor. Zu erkennen ist insbesondere die Gestaltung der Volumenelemente in Form einer "Acht", um entsprechend ausgebildete Hohlräume 6 (siehe Figur 2) in der Sohle zu erzeugen.

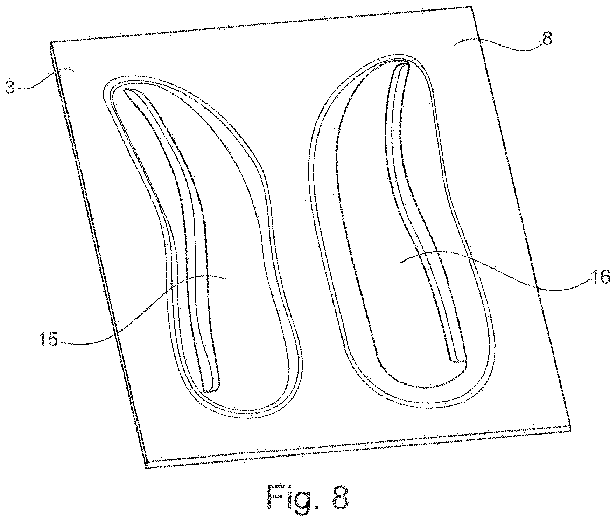

In Figur 8 ist zu sehen, wie bei der Herstellung der beiden Sohlenteile 2 und 7 die beiden Werkzeugteile 3 und 8 durch jeweilige Abschlussteile 15 und 16 verschlossen werden, um den zu fertigenden Sohlenteilen 2 und 7 eine definierte Geometrie zu verleihen.

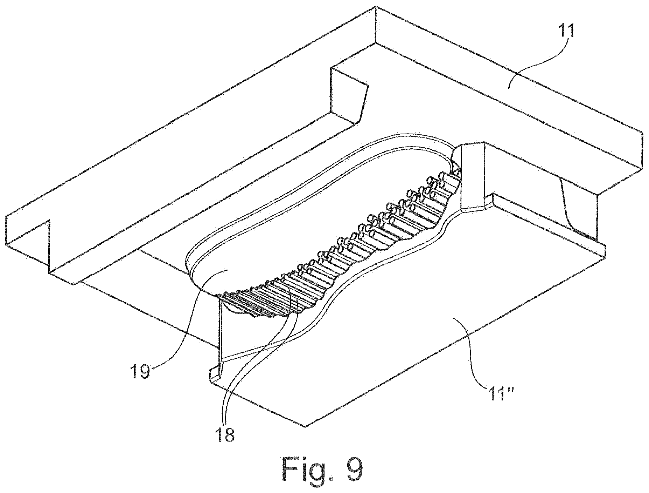

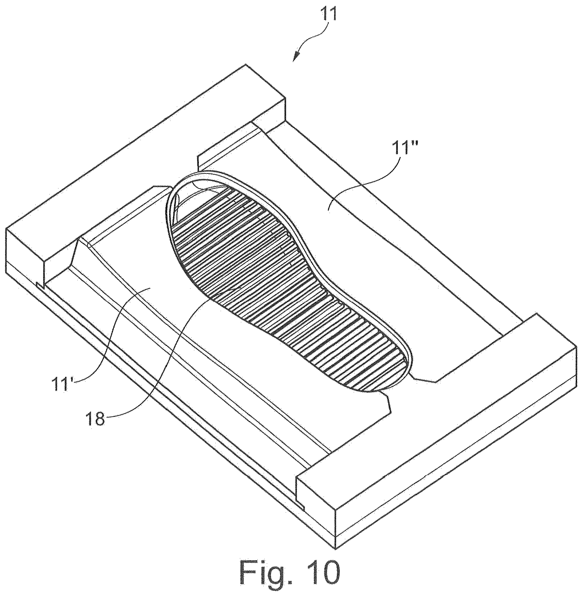

In den Figuren 9 und 10 ist das dritte Werkzeug 11 bzw. Teile desselben zu erkennen.

In Figur 9 ist das eine Teil 11' des dritten Werkzeugs 11 dargestellt sowie ein Abschlussteil 19, welches die Werkzeugkavität des dritten Werkzeugs 11 nach oben hin abschließt. Zu erkennen sind weiterhin Volumenelemente 18, die denjenigen entsprechen, die in den Figuren 6 und 7 dargestellt sind. Es handelt sich hierbei um solche Volumenelemente, die in die vorgefertigten Hohlräume 6 der beiden Sohlenteile 2 und 7 eingreifen und diese während der Bearbeitung im dritten Werkzeug 11 freihalten, so dass sie nicht durch die im dritten Werkzeug 11 stattfindenden Prozessschritte verschlossen werden. Ein Entformen der fertigen Sohle ist leicht möglich, wenn sich die beiden Teile 11' und 11" des dritten Werkzeugs 11 in der in Figur 5 dargestellten Weise voneinander weg bewegen.

Figur 10 zeigt die zusammengeschobenen beiden Teile 11' und 11" des dritten Werkzeugs 11, wobei hier die beiden Sohlenteile 2 und 7 noch nicht im dritten Werkzeug 11 aufgenommen sind. Zu erkennen sind hier allerdings wiederum die Volumenelemente 18, die im zusammengeschobenen Zustand gemäß Figur 10 Volumina bilden, die sich über die gesamte Breite der zu fertigenden Sohle erstrecken und so die Hohlräume 6 in den Sohlenteilen 2, 7 freihalten.

### Bezugszeichenliste:

- 1: Sohle
- 2: erstes Sohlenteil
- 3: erstes Werkzeug / erstes Werkzeugteil
- 4: erste Werkzeugkavität
- 5: Volumenelement
- 6: Hohlraum
- 7: zweites Sohlenteil
- 8: zweites Werkzeug / zweites Werkzeugteil
- 9: zweite Werkzeugkavität
- 10: Volumenelement
- 11: drittes Werkzeug
- 11': Teil des dritten Werkzeugs
- 11": Teil des dritten Werkzeugs
- 12: Abschnitt des ersten Sohlenteils
- 13: Abschnitt des zweiten Sohlenteils
- 14: Verbindungsmaterial
- 15: Abschlussteil
- 16: Abschlussteil
- 17: weiteres Sohlenelement (Außensohle)
- 18: Volumenelement
- 19: Abschlussteil

- L: Längsrichtung
- V: Vertikalrichtung
- Q: Querrichtung

## Patentansprüche

1. Verfahren zur Herstellung einer Sohle (1) eines Schuhs, insbesondere eines Sportschuhs, wobei die Sohle (1) ein erstes und ein zweites Sohlenteil (2, 7) aufweist, wobei die beiden Sohlenteile (2, 7) an einer Fläche aneinandergrenzen, die in Längsrichtung (L) des Schuhs und in Vertikalrichtung (V) verläuft und wobei die beiden Sohlenteile (2, 7) an ihrer Oberseite Abschnitte (12, 13) aufweisen, die benachbart zueinander angeordnet sind und insgesamt eine weitgehend ebene Fläche bilden, umfassend die Schritte:
a) Herstellen des ersten Sohlenteils (2) in einem ersten Werkzeug oder Werkzeugteil (3) durch Einspritzen, Einsprühen oder Eingießen des Sohlenmaterials in eine Werkzeugkavität (4) des ersten Werkzeugs oder Werkzeugteils (3), wobei in die Werkzeugkavität (4) eine Anzahl Volumenelemente (5) hineinragen, die Hohlräume (6) im ersten Sohlenteil (2) schaffen;
b) Herstellen des zweiten Sohlenteils (7) in einem zweiten Werkzeug oder Werkzeugteil (8) durch Einspritzen, Einsprühen oder Eingießen des Sohlenmaterials in eine Werkzeugkavität (9) des zweiten Werkzeugs oder Werkzeugteils (8), wobei in die Werkzeugkavität (9) eine Anzahl Volumenelemente (10) hineinragen, die Hohlräume (6) im zweiten Sohlenteil (7) schaffen;
c) Nach dem Verfestigen des ersten und zweiten Sohlenteils (2, 7): Herausnehmen des ersten und des zweiten Sohlenteils (2, 7) aus dem ersten und dem zweiten Werkzeug oder Werkzeugteil (3, 8) und Einlegen des ersten und des zweiten Sohlenteils (2, 7) in ein drittes Werkzeug (11), wobei die beiden Sohlenteile (2, 7) so zueinander ausgerichtet werden, dass die Hohlräume (6) zumindest teilweise miteinander fluchten und sich über die gesamte Breite der zu fertigenden Sohle erstrecken;
d) Übergießen, Übersprühen und/oder Überspritzen zumindest eines Abschnitts (12, 13) des ersten und des zweiten Sohlenteils (2, 7) mit einem Verbindungsmaterial (14), wobei die übergossenen, übersprühten und/oder überspritzten Abschnitte (12, 13) des ersten und des zweiten Sohlenteils (2, 7) aneinander angrenzend sind, um das erste und zweite Sohlenteil (2, 7) miteinander zu verbinden.

2. Verfahren nach Anspruch 1, **dadurch gekennzeichnet, dass** es weiterhin die Schritte umfasst:
e) Herstellen mindestens eines weiteren Sohlenteils in einem weiteren Werkzeug oder Werkzeugteil durch Einspritzen, Einsprühen oder Eingießen des Sohlenmaterials in eine Werkzeugkavität des weiteren Werkzeugs oder Werkzeugteils, wobei in die Werkzeugkavität eine Anzahl Volumenelemente hineinragen, die Hohlräume in dem weiteren Sohlenteil (2) schaffen;
f) Nach dem Verfestigen des weiteren Sohlenteils: Herausnehmen des weiteren Sohlenteils aus dem weiteren Werkzeug oder Werkzeugteil und Einlegen des weiteren Sohlenteils zusammen mit dem ersten und zweiten Sohlenteil (2, 7) in das dritte Werkzeug (11);
g) Übergießen, Übersprühen und/oder Überspritzen zumindest eines Abschnitts des ersten, des zweiten und des weiteren Sohlenteils (2, 7) mit einem Verbindungsmaterial (14), wobei die übergossenen, übersprühten und/oder überspritzten Abschnitte (12, 13) des ersten, des zweiten und weiteren Sohlenteils (2, 7) aneinander angrenzend sind, um das erste, das zweite und das weitere Sohlenteil (2, 7) miteinander zu verbinden.

3. Verfahren nach Anspruch 1 oder 2, **dadurch gekennzeichnet, dass** im dritten Werkzeug (11) Volumenelemente angeordnet sind, die während des Schritts d) gemäß Anspruch 1 oder während des Schritts g) gemäß Anspruch 2 die Hohlräume (6) in den Sohlenteilen (2, 7) ausfüllen.

4. Verfahren nach einem der Ansprüche 1 bis 3, **dadurch gekennzeichnet, dass** beim Herstellen des ersten und zweiten Sohlenteils (2, 7) die Werkzeugkavitäten (4, 9) des ersten und zweiten Werkzeugs oder Werkzeugteils (3, 8) durch ein Abschlussteil (15, 16) abgeschlossen werden.

5. Verfahren nach einem der Ansprüche 1 bis 4, **dadurch gekennzeichnet, dass** vor dem Einlegen der Sohlenteile (2, 7) in das dritte Werkzeug (11) ein weiteres Sohlenelement (17) im dritten Werkzeug (11) platziert wird.

6. Verfahren nach Anspruch 5, **dadurch gekennzeichnet, dass** das weitere Sohlenelement (17) eine Außensohle ist.

7. Verfahren nach Anspruch 5 oder 6, **dadurch gekennzeichnet, dass** das Verbindungsmaterial (14) und das weitere Sohlenelement (17) an sich gegenüberliegenden Seiten der herzustellenden Sohle angeordnet sind.

8. Verfahren nach einem der Ansprüche 5 bis 7, **dadurch gekennzeichnet, dass** zwischen dem weiteren Sohlenelement (17) und den Sohlenteilen (2, 7) ein Bindemittel eingebracht wird.

9. Verfahren nach Anspruch 8, **dadurch gekennzeichnet, dass** das Bindemittel ein Klebstoff ist, insbesondere flüssiges Polyurethan.

10. Verfahren nach einem der Ansprüche 1 bis 9, **dadurch gekennzeichnet, dass** als Material für die Sohlenteile (2, 7) und/oder als Verbindungsmaterial (14) Polyurethan-Material, Thermoplastisches Polyurethan (TPU) oder Thermoplastisches Elastomer (TPE) verwendet wird oder ein Material, das diese Stoffe aufweist.

11. Verfahren nach Anspruch 10, **dadurch gekennzeichnet, dass** das Material für die Sohlenteile (2, 7) und/oder das Verbindungsmaterial (14) geschäumt wird.

12. Verfahren nach einem der Ansprüche 1 bis 11, **dadurch gekennzeichnet, dass** das Material der Sohlenteile (2, 7) eine Dichte zwischen 0,20 und 0,50 g/cm³ hat.

13. Verfahren nach einem der Ansprüche 1 bis 12, **dadurch gekennzeichnet, dass** das Material der Sohlenteile (2, 7) eine Härte zwischen 30 und 50 Asker C aufweist.

14. Verfahren nach einem der Ansprüche 1 bis 13, **dadurch gekennzeichnet, dass** die Sohlenteile (2, 7) eine Zwischensohle bilden.

15. Verfahren nach einem der Ansprüche 1 bis 14, **dadurch gekennzeichnet, dass** das Öffnen des dritten Werkzeugs (11) zwecks Entformen der fertigen Sohle durch Wegbewegen zweier Teile (11', 11") des dritten Werkzeugs (11) voneinander erfolgt.

## Claims

1. Method for producing a sole (1) of a shoe, in particular of a sports shoe, wherein the sole (1) comprises a first and a second sole part (2, 7), wherein the two sole parts (2, 7) adjoining each other on a surface extending in the longitudinal direction (L) of the shoe and in the vertical direction (V) and wherein the two sole parts (2, 7) have sections (12, 13) on their upper side which are arranged adjacent to each other and together form a largely flat surface, comprising the steps:
a) Producing of the first sole part (2) in a first mould or mould part (3) by injecting, spraying or pouring the sole material into a mould cavity (4) of the first mould or mould part (3), wherein a number of volume elements (5) protrude into the mould cavity (4) and create cavities (6) in the first sole part (2);
b) Producing of the second sole part (7) in a second mould or mould part (8) by injecting, spraying or pouring the sole material into a mould cavity (9) of the second mould or mould part (8), wherein a number of volume elements (10) protrude into the mould cavity (9) and create cavities (6) in the second sole part (7);
c) After the first and second sole parts (2, 7) have solidified: Removing the first and second sole parts (2, 7) from the first and second mould or mould part (3, 8) and placing the first and second sole parts (2, 7) into a third mould (11), wherein the two sole parts (2, 7) are aligned with each other in such a way that the cavities (6) are at least partially aligned with each other and extend over the entire width of the sole to be produced;
d) Overpouring, overspraying and/or overinjecting a joining material (14) over at least one section (12, 13) of the first and second sole parts (2, 7), wherein the sections (12, 13) of the first and second sole part (2, 7) over which the material is overpoured, oversprayed and/or overinjected adjoining each other, in order to join the first and second sole parts (2, 7) to each other.

2. Method according to claim 1, **characterized in that** it further comprises the steps:
e) Producing of at least one further sole part in a further mould or mould part by injecting, spraying or pouring the sole material into a mould cavity of the further mould or mould part, wherein a number of volume elements protrude into the mould cavity and create cavities in the further sole part (2);
f) After the further sole part has solidified: Removing the further sole part from the further mould or mould part and inserting the further sole part together with the first and second sole part (2, 7) into the third mould (11);
g) Overpouring, overspraying and/or overinjecting a joining material (14) over at least one section of the first, the second and the further sole part (2, 7), wherein the sections (12, 13) of the first, the second and the further sole part (2, 7) over which the material is overpoured, oversprayed and/or overinjected adjoining each other, in order to join the first, the second and the further sole parts (2, 7) to each other.

3. Method according to claim 1 or 2, **characterized in that** volume elements are arranged in the third mould (11), which during step d) according to claim 1 or during step g) according to claim 2 fill the cavities (6) in the sole parts (2, 7).

4. Method according to one of claims 1 to 3, **characterized in that** during the production of the first and second sole part (2, 7) the mould cavities (4, 9) of the first and second mould or mould part (3, 8) are closed off by a closure part (15, 16).

5. Method according to one of claims 1 to 4, **characterized in that** before the sole parts (2, 7) are inserted into the third mould (11), a further sole element (17) is placed in the third mould (11).

6. Method according to claim 5, **characterized in that** the further sole element (17) is an outer sole.

7. Method according to claim 5 or 6, **characterized in that** the joining material (14) and the further sole element (17) are arranged on opposite sides of the sole to be produced.

8. Method according to one of claims 5 to 7, **characterized in that** a binding agent is introduced between the further sole element (17) and the sole parts (2, 7).

9. Method according to claim 8, **characterized in that** the binding agent is an adhesive, especially liquid polyurethane.

10. Method according to one of claims 1 to 9, **characterized in that** polyurethane material, thermoplastic polyurethane (TPU) or thermoplastic elastomer (TPE) or a material comprising these substances is used as material for the sole parts (2, 7) and/or as joining material (14).

11. Method according to claim 10, **characterized in that** the material for the sole parts (2, 7) and/or the joining material (14) is foamed.

12. Method according to one of claims 1 to 11, **characterized in that** the material of the sole parts (2, 7) has a density between 0.20 and 0.50 g/cm³.

13. Method according to one of claims 1 to 12, **characterized in that** the material of the sole parts (2, 7) has a hardness between 30 and 50 Asker C.

14. Method according to one of claims 1 to 13, **characterized in that** the sole parts (2, 7) form a midsole.

15. Method according to one of claims 1 to 14, **characterized in that** the opening of the third mould (11) for the purpose of demoulding the finished sole takes place by moving two parts (11', 11") of the third mould (11) away from each other.

## Revendications

1. Procédé de fabrication d'une semelle (1) de chaussure, notamment de chaussure de sport, la semelle (1) comportant des première et deuxième parties de semelle (2, 7), les deux parties de semelle (2, 7) étant adjacentes l'une à l'autre au niveau d'une surface qui s'étend dans la direction longitudinale (L) de la chaussure et dans la direction verticale (V) et les deux parties de semelle (2, 7) comportant sur leur face supérieure des portions (12, 13) qui sont disposées l'une à côté de l'autre et qui forment globalement une surface qui est dans une large mesure plane, le procédé comprenant les étapes suivantes :
a) fabriquer la première partie de semelle (2) dans un premier outil ou une première partie d'outil (3) par injection, pulvérisation ou coulée d'un matériau de semelle dans une cavité (4) du premier outil ou de la première partie d'outil (3), un certain nombre d'éléments de volume (5), qui créent des cavités (6) dans la première partie de semelle (2), faisant saillie dans la cavité d'outil (4) ;
b) fabriquer la deuxième partie de semelle (7) dans un deuxième outil ou une deuxième partie d'outil (8) par injection, pulvérisation ou coulée du matériau de semelle dans une cavité (9) du deuxième outil ou de la deuxième partie d'outil (8), un certain nombre d'éléments de volume (10), qui créent des cavités (6) dans la deuxième partie de semelle (7), faisant saillie dans la cavité d'outil (9) ;
c) après la solidification des première et deuxième parties de semelle (2, 7) : retirer les première et deuxième parties de semelle (2, 7) des premier et deuxième outils ou des première et deuxième parties d'outil (3, 8) et insérer les première et deuxième parties de semelle (2, 7) dans un troisième outil (11), les deux parties de semelle (2, 7) étant alignées l'une avec l'autre de telle sorte que les cavités (6) soient au moins partiellement alignées l'une avec l'autre et s'étendent sur toute la largeur de la semelle à fabriquer ;
d) effectuer une coulée, pulvérisation et/ou projection en excès d'un matériau de liaison (14) sur au moins une portion (12, 13) des première et deuxième parties de semelle (2, 7), les portions (12, 13), soumises à une coulée, pulvérisation et/ou projection en excès, des première et deuxième parties de semelle (2, 7) étant adjacentes les unes aux autres afin de relier les première et deuxième parties de semelle (2,7) l'une à l'autre.

2. Procédé selon la revendication 1, **caractérisé en ce qu'**il comprend en outre les étapes suivantes :
e) fabriquer au moins une autre partie de semelle dans un autre outil ou une autre partie d'outil par injection, pulvérisation ou coulée du matériau de semelle dans une cavité de l'autre outil ou de l'autre partie d'outil, un certain nombre d'éléments de volume, qui créent des cavités dans l'autre partie de semelle (2), faisant saillie dans la cavité de l'outil ;
f) après la solidification de l'autre partie de semelle : retirer l'autre partie de semelle de l'autre outil ou de l'autre partie d'outil et insérer l'autre partie de semelle conjointement avec les première et deuxième parties de semelle (2, 7) dans le troisième l'outil (11) ;
g) effectuer une coulée, pulvérisation et/ou projection en excès d'un matériau de liaison (14) sur au moins une portion des première, deuxième et autre parties de semelle (2, 7), les portions (12, 13), soumises à une coulée, pulvérisation et/ou projection en excès, des première, deuxième et autre parties de semelle (2, 7) étant adjacentes les unes aux autres afin de relier les première et deuxième parties de semelle (2,7) l'une à l'autre.

3. Procédé selon la revendication 1 ou 2, **caractérisé en ce que** dans le troisième outil (11) sont disposés des éléments de volume qui remplissent les cavités (6) des parties de semelle (2, 7) à l'étape d) de la revendication 1 ou à l'étape g) de la revendication 2.

4. Procédé selon l'une des revendications 1 à 3, **caractérisé en ce que**, lors de la fabrication des première et deuxième parties de semelle (2, 7), les cavités (4, 9) des premier et deuxième outils ou des première et deuxième parties d'outil ou (3, 8) sont fermées par une partie de fermeture (15, 16).

5. Procédé selon l'une des revendications 1 à 4, **caractérisé en ce qu'**un autre élément de semelle (17) est placé dans le troisième outil (11) avant que les parties de semelle (2, 7) ne soient insérées dans le troisième outil (11).

6. Procédé selon la revendication 5, **caractérisé en ce que** l'autre élément de semelle (17) est une semelle extérieure.

7. Procédé selon la revendication 5 ou 6, **caractérisé en ce que** le matériau de liaison (14) et l'autre élément de semelle (17) sont disposés sur des faces opposées de la semelle à réaliser.

8. Procédé selon l'une des revendications 5 à 7, **caractérisé en ce qu'**un liant est introduit entre l'autre élément de semelle (17) et les parties de semelle (2, 7).

9. Procédé selon la revendication 8, **caractérisé en ce que** le liant est une colle, notamment du polyuréthane liquide.

10. Procédé selon l'une des revendications 1 à 9, **caractérisé en ce que** le matériau des parties de semelle (2, 7) et/ou le matériau de liaison (14) utilisés sont du polyuréthane, du polyuréthane thermoplastique (TPU) ou de l'élastomère thermoplastique (TPE) ou un matériau qui contient ces substances.

11. Procédé selon la revendication 10, **caractérisé en ce que** le matériau des parties de semelle (2, 7) et/ou le matériau de liaison (14) est moussé.

12. Procédé selon l'une des revendications 1 à 11, **caractérisé en ce que** le matériau des parties de semelle (2, 7) a une densité comprise entre 0,20 et 0,50 g/cm³.

13. Procédé selon l'une des revendications 1 à 12, **caractérisé en ce que** le matériau des parties de semelle (2, 7) a une dureté comprise entre 30 et 50 Asker C.

14. Procédé selon l'une des revendications 1 à 13, **caractérisé en ce que** les parties de semelle (2, 7) forment une semelle intermédiaire.

15. Procédé selon l'une des revendications 1 à 14, **caractérisé en ce que** l'ouverture du troisième outil (11) en vue du démoulage de la semelle finie est effectuée par écartement de deux parties (11', 11'') du troisième outil (11).
